# EUROPEAN PATENT APPLICATION

(11) **EP 4 745 069 A1**
(43) Date of publication of application: **20.05.2026**
(21) Application number: 25213653.6
(22) Date of filing: 05.11.2025
(51) Int. Cl.: B65H 3/06, B65H 1/04

(54) **DOCUMENT CONVEYING DEVICE, AND CORRESPONDING IMAGE FORMING APPARATUS**

(30) Priority: 15.11.2024 JP 2024199351
(71) Applicant: KYOCERA Document Solutions Inc., Osaka-shi, Osaka 540-8585 (JP)
(72) Inventor: NGUYEN, Trung Thanh, Osaka-shi, 540-8585 (JP)
(74) Representative: Plougmann Vingtoft a/s

(57) **Abstract**

A document conveying device (1) includes a roller holder (27), a cover portion (29), a pair of wall portions (31, 32), a hook portion (33), and a linking portion (36). The roller holder (27) rotatably supports a pickup roller (25) and is provided so as to be rotatable about a rotation shaft (26A) of a sheet feed roller (26). The cover portion (29) is provided so as to be openable and closable relative to a document guide portion (28). The pair of wall portions (31, 32) face each other in the axial direction of the rotation shaft (26A) with the cover portion (29) interposed therebetween. The hook portion (33) is provided at one end portion of the cover portion (29) in the axial direction so as to be capable of advancing and retracting along the axial direction, and engages with an upper surface portion (31A, 32A) of the wall portion (31, 32). The linking portion (36) rotates the roller holder (27) in conjunction with the advancing and retracting of the hook portion (33).

## Description

### BACKGROUND

The present disclosure relates to a document conveying device and an image forming apparatus.

An image forming apparatus including a document conveying device that conveys a document is known.

This type of document conveying device includes a pickup roller, a sheet feed roller, a document guide portion, a cover portion, and a gear. The pickup roller picks up a document placed on a document placement portion such as a document tray. The sheet feed roller is provided farther on a downstream side than the pickup roller in a direction in which the pickup roller feeds the document, and conveys the document. The document guide portion comes into contact with a lower surface of a document conveyed by the sheet feed roller to guide the document. The cover portion rotatably supports the pickup roller and the sheet feed roller, and is provided so as to be openable and closable about a shaft located farther on the downstream side than the sheet feed roller in the feeding direction. The gear is provided at a first end portion of the cover portion in a width direction of the document, and forms a transmission path for a rotational driving force from a motor to the sheet feed roller and the pickup roller when the cover is closed.

### SUMMARY

A document conveying device according to one aspect of the present disclosure includes a document placement portion, a pickup roller, a sheet feed roller, a roller holder, a document guide portion, a cover portion, a pair of wall portions, a hook portion, a motor, a gear, and a linking portion. A document is placed on the document placement portion. The pickup roller comes into contact with an upper surface of the document placed on the document placement portion and picks up the document. The sheet feed roller is provided farther on a downstream side than the pickup roller in a feeding direction in which the pickup roller feeds the document, and conveys the document. The roller holder is provided so as to rotatably support the pickup roller and is rotatable around a rotation shaft of the sheet feed roller between a contact position where the pickup roller comes in contact with the document and a separated position where the pickup roller is separated from the document. The document guide portion comes in contact with a lower surface of the document farther on the downstream side than the sheet feed roller in the feeding direction to guide the document. The cover portion is provided so as to rotatably support the sheet feed roller and is rotatable between a closed position that covers the document guide portion and an open position that externally exposes the document guide portion, around an axis that is farther on the downstream side than the sheet feed roller in the feeding direction. The pair of wall portions face each other in the axial direction of the rotation shaft with the cover portion interposed therebetween. The hook portion is provided to be capable of advancing and retracting along the axial direction at each of first and second end portions in the axial direction of the cover portion, and when the cover portion is rotated to the closed position, the hook portion retracts toward the cover portion side by coming into contact with the upper surface portion of the wall portion and engages with the upper surface portion. The motor rotates the pickup roller and the sheet feed roller. The gear is provided at the first end portion, and forms a transmission path for a rotational driving force from the motor to the sheet feed roller and the pickup roller in a case in which the hook portion of the first end portion engages with the upper surface portion of the wall portion. The linking portion is provided on the cover portion and rotates the roller holder in conjunction with the advancing and retracting of the hook portion of the second end portion.

An image forming apparatus according to another aspect of the present disclosure includes the document conveying device, an image reading portion, and an image forming portion. The image reading portion reads an image of the document conveyed by the document conveying device. The image forming portion forms an image of the document read by the image reading portion on a sheet.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a cross-sectional view showing a configuration of an image forming apparatus of an embodiment according to the present disclosure.
FIG. 2 is a perspective view showing a configuration of an ADF and an image reading portion of the image forming apparatus of an embodiment according to the present disclosure.
FIG. 3 is a cross-sectional view showing a configuration of an ADF of an image forming apparatus of an embodiment according to the present disclosure.
FIG. 4 is a cross-sectional view showing a configuration of an ADF of an image forming apparatus of an embodiment according to the present disclosure.
FIG. 5 is a plan view showing a configuration of a pickup roller, a sheet feed roller, and a roller holder of an image forming apparatus of an embodiment according to the present disclosure.
FIG. 6 is a plan view showing a configuration of an ADF of an image forming apparatus of an embodiment according to the present disclosure.
FIG. 7 is a side view showing an image forming apparatus of an embodiment according to the present disclosure with a cover portion open.
FIG. 8 is a cross-sectional view taken along line VIII-VIII in FIG. 6.
FIG. 9 is a diagram showing a state in which one side of a cover portion of an image forming apparatus of an embodiment according to the present disclosure is raised.
FIG. 10 is a diagram illustrating a configuration of a roller holder and a linking portion of an image forming apparatus of an embodiment according to the present disclosure.
FIG. 11 is a diagram showing a configuration of a linking portion of an image forming apparatus of an embodiment according to the present disclosure.
FIG. 12 is a diagram illustrating a configuration of a roller holder and a linking portion of an image forming apparatus of an embodiment according to the present disclosure.
FIG. 13 is a cross-sectional view showing a roller holder and a linking portion when a front hook portion is engaged with an upper surface portion in an image forming apparatus of an embodiment according to the present disclosure.
FIG. 14 is a cross-sectional view showing a roller holder and a linking portion when a front hook portion is not engaged with an upper surface portion in an image forming apparatus of an embodiment according to the present disclosure.

### DETAILED DESCRIPTION

Hereinafter, embodiments of a technique according to the present disclosure will be described with reference to the accompanying drawings. Note that the following embodiments are examples of a specific implementation of the technique according to the present disclosure and do not limit the technical scope of the present disclosure.

### [Configuration of Image Forming Apparatus 100]

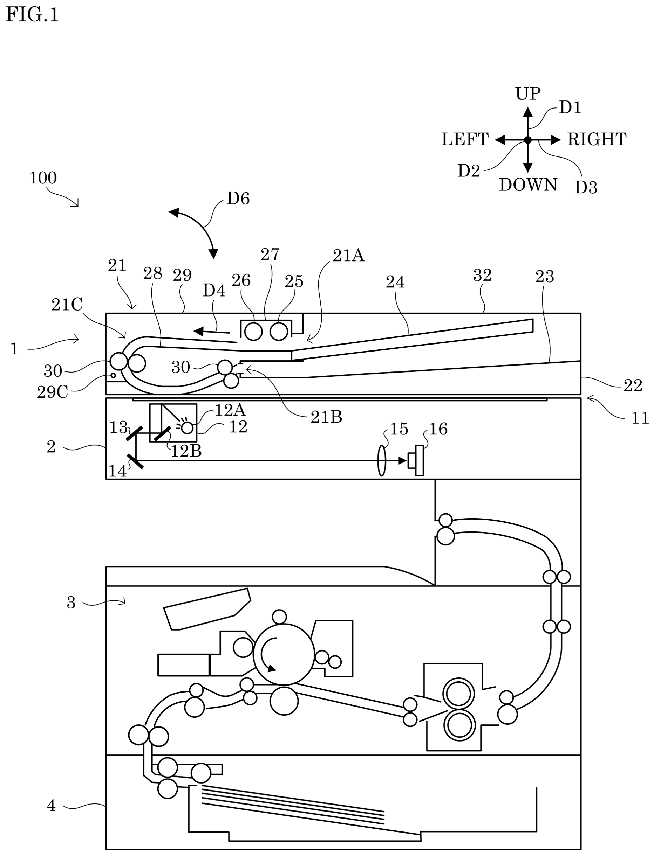

First, with reference to FIG. 1, a configuration of an image forming apparatus 100 of an embodiment according to the present disclosure will be described.

Note that for convenience of explanation, a vertical direction in an installation state where the image forming apparatus 100 is usable (the state shown in FIG. 1) is defined as an up-down direction D1. In addition, a front-rear direction D2 is defined with a surface of the image forming apparatus 100 shown in FIG. 1 facing the viewer as the front (front surface). In addition, a left-right direction D3 is defined based on the front surface of the image forming apparatus 100 in the installed state.

The image forming apparatus 100 is a multifunction peripheral having multiple functions, such as a scanning function for reading an image from a document, a printing function for forming an image based on image data, a fax function, and a copy function. Note that the image forming apparatus 100 may be a copy machine.

As shown in FIG. 1, the image forming apparatus 100 includes an Auto Document Feeder (ADF) 1, an image reading portion 2, an image forming portion 3, and a sheet feeding portion 4.

The ADF 1 conveys a document whose image is to be read by the image reading portion 2. The ADF 1 is an example of a document conveying device according to the present disclosure.

The image reading portion 2 is capable of reading an image of a document. More specifically, the image reading portion 2 is capable of reading an image of a document using a Charge Coupled Device (CCD) method. As shown in FIG. 1, the image reading portion 2 includes a document table 11, a reading unit 12, a mirror 13, a mirror 14, an optical lens 15, and a CCD 16.

The document table 11 is the upper surface portion of a box-shaped housing that houses the components of the image reading portion 2. The document table 11 includes a contact glass on which a document is placed.

The reading unit 12 is provided below the contact glass of the document table 11. The reading unit 12 is configured to be movable along a sub-scanning direction, which is the same direction as the left-right direction D3, by a moving mechanism (not shown) having a driving portion such as a stepping motor. As shown in FIG. 1, the reading unit 12 includes a light source 12A and a mirror 12B.

The light source 12A is a plurality of LEDs arranged along a main scanning direction, which is the same direction as the front-rear direction D2. The light source 12A emits light for one line in the main scanning direction toward the contact glass of the document table 11. Light emitted from the light source 12A passes through the contact glass and is irradiated onto a document placed on the document table 11 or a document being conveyed by the ADF 1. The mirror 12B reflects light emitted from the light source 12A and reflected by the document to the mirror 13.

The mirror 13 reflects the light reflected by the mirror 12B of the reading unit 12 to the mirror 14. The mirror 14 reflects the light reflected by the mirror 13 to the optical lens 15. The optical lens 15 collects the light reflected by the mirror 14 and makes the light incident on the CCD 16.

The CCD 16 is an image sensor having a plurality of photoelectric conversion elements arranged along the main scanning direction. The CCD 16 outputs an electrical signal according to the amount of light received. In the image reading portion 2, light emitted from the light source 12A and reflected by a document is incident on the CCD 16 via the mirror 12B, the mirror 13, the mirror 14 and the optical lens 15. Thus, the CCD 16 outputs an analog electrical signal corresponding to the image on the document. The analog electrical signal output from the CCD 16 is converted into a digital electrical signal (image data) by an analog front end (AFE) circuit (not shown) and input to a control portion (not shown). The image data output from the image reading portion 2 is used for forming an image by the image forming portion 3, and the like.

The image reading portion 2 may read the image of the document using a Contact Image Sensor (CIS) method.

The image forming portion 3 forms an image on a sheet based on image data. More specifically, the image forming portion 3 forms an image on a sheet by electrophotography. For example, the image forming portion 3 includes a photoconductor drum, a charging roller, a laser scanning unit, a developing device, a transfer roller, a cleaning device, a fixing device, and a sheet discharge portion. The image forming portion 3 may form an image on a sheet by another image forming method such as an inkjet method.

The sheet feeding portion 4 supplies sheets to the image forming portion 3. The sheet feeding portion 4 includes a sheet feed cassette and a plurality of conveying rollers.

### [Configuration of ADF 1]

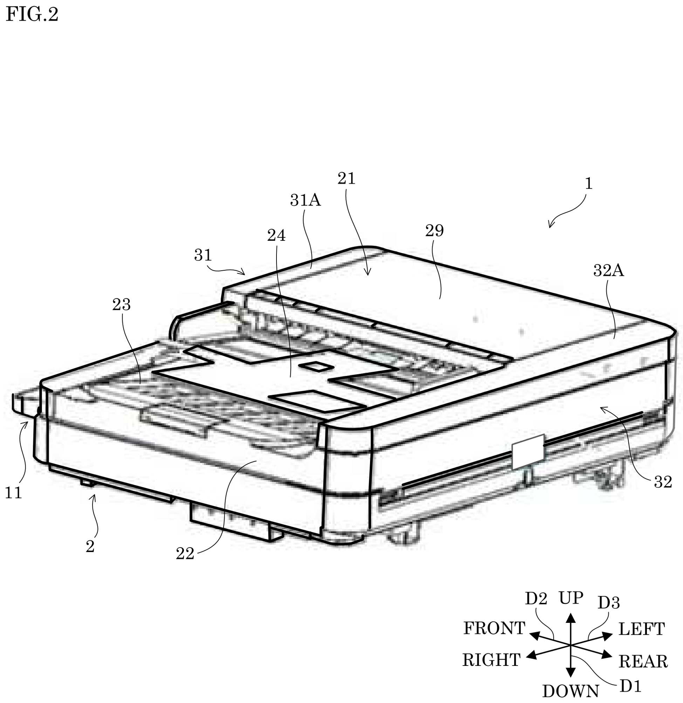

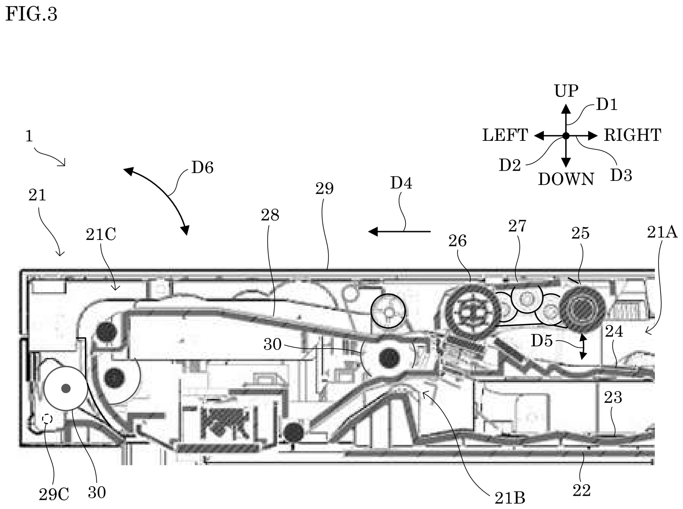

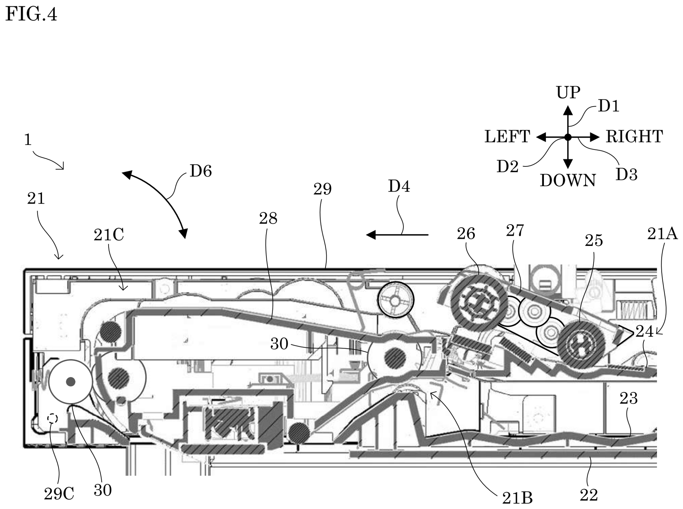

Next, a configuration of the ADF 1 will be described with reference to FIGS. 1 to 8. Here, FIG. 2 is a perspective view of the ADF 1 in a state in which the ADF 1 is closed relative to the document table 11, as viewed from the rear side of the image forming apparatus 100. In addition, FIG. 3 is a cross-sectional view showing an internal configuration of an accommodating portion 21 of the ADF 1, and illustrates a state in which the pickup roller 25 is arranged at a separated position that is separated from the document. In addition, FIG. 4 is a cross-sectional view showing an internal configuration of the accommodating portion 21 of the ADF 1, and illustrates a state in which the pickup roller 25 is arranged at a contact position where the pickup roller 25 comes into contact with the document.

As shown in FIG. 1, the ADF 1 is provided above the document table 11 of the image reading portion 2. In addition, the ADF 1 is provided so as to be openable and closable relative to the document table 11 of the image reading portion 2. More specifically, the ADF 1 is rotatably supported by a pair of hinges provided at a rear end portion of the document table 11. Thus, the ADF 1 is able to change position between a closed position (see FIGS. 1 and 2) in which the document table 11 is covered and an open position (not shown) in which the document table 11 is exposed.

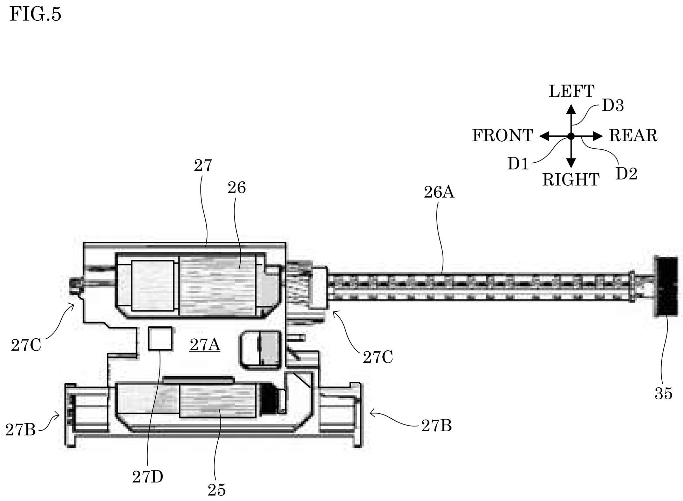

As shown in FIGS. 1 and 2, the ADF 1 includes an accommodating portion 21, a bottom surface portion 22, a discharge tray 23, a document tray 24, a pickup roller 25, a sheet feed roller 26, a roller holder 27, a document guide portion 28, a cover portion 29, a plurality of conveying rollers 30, a front wall portion 31, and a rear wall portion 32. In addition, the ADF 1 also includes a hook portion 33, a motor 34, and an input gear 35, which are shown in FIGS. 5, 6 and 8.

The accommodating portion 21 is formed in a generally rectangular parallelepiped shape with a size in the front-rear direction D2 that is approximately the same as that of the document table 11 and a size in the left-right direction D3 that is smaller than that of the document table 11 (see FIG. 2). The accommodating portion 21 is arranged above an area including a left end portion of the document table 11 when the ADF 1 is closed relative to the document table 11 (see FIGS. 1 and 2). The accommodating portion 21 stores a pickup roller 25, a sheet feed roller 26, and a plurality of conveying rollers 30 that are used to convey the document. A document entrance 21A (see FIG. 1) through which documents are introduced is formed on a right side surface of the accommodating portion 21. In addition, below the document entrance 21A on the right side surface of the accommodating portion 21, a document discharge port 21B (see FIG. 1) through which the document is discharged is formed. A document conveying path 21C (see FIG. 1) that runs from the document entrance 21A to the document discharge port 21B is formed inside the accommodating portion 21. The document conveying path 21C includes an upper side conveying path extending in the left-right direction D3, a lower side conveying path extending in the left-right direction D3 below the upper side conveying path, and a folding portion connecting the left end of the upper side conveying path and the left end of the lower side conveying path.

The bottom surface portion 22 is formed in a flat plate shape extending toward the right from a bottom portion of the right side surface of the accommodating portion 21 (see FIG. 2). The bottom surface portion 22, together with the bottom surface of the accommodation portion 21, forms a cover surface that covers the document table 11 of the image reading portion 2. The cover surface also serves as a bottom surface of the ADF 1. The bottom surface portion 22 is arranged above an area including a right end portion of the document table 11 when the ADF 1 is closed relative to the document table 11 (see FIGS. 1 and 2).

As shown in FIG. 1, the discharge tray 23 is formed on an upper portion of the bottom surface portion 22. The document conveyed by the ADF 1 is discharged onto the discharge tray 23.

As shown in FIG. 1, the document tray 24 is provided above the discharge tray 23 and faces the discharge tray 23. The document tray 24 is provided below the document entrance 21A of the accommodating portion 21 and above the document discharge port 21B, so as to extend rightward. The document tray 24 holds documents to be conveyed by the ADF 1. The document tray 24 is formed in a flat plate shape having a placement surface on which documents are placed. The document tray 24 is arranged so as to be inclined downward toward the document entrance 21A so that the documents placed on the placement surface are guided to the document entrance 21A. The position of the documents placed on the document placement surface is adjusted in the front-rear direction D2 by a pair of side cursors provided on the document tray 24. The document tray 24 is an example of a document placement portion according to the present disclosure.

As shown in FIG. 1, the pickup roller 25 is provided above the document entrance 21A. The pickup roller 25 comes into contact with an upper surface of the uppermost document among a plurality of documents placed on the document tray 24, and feeds the document to the document conveying path 21C.

As shown in FIG. 1, the sheet feed roller 26 is provided farther on the downstream side than the pickup roller 25 in the feeding direction D4 (see FIG. 1) in which the pickup roller 25 feeds out the document. The sheet feed roller 26 conveys the document fed out by the pickup roller 25 toward a rear side of the document conveying path 21C.

The roller holder 27 rotatably supports the pickup roller 25. In addition, the roller holder 27 is provided so as to be rotatable around the rotation shaft 26A (see FIG. 4) of the sheet feed roller 26 between the contact position (see FIG. 4) where the pickup roller 25 contacts the document and a separated position (see FIG. 3) where the pickup roller 25 is separated from the document. As shown in FIG. 5, the rotation shaft 26A is a shaft that extends in the front-rear direction D2.

As shown in FIG. 5, the roller holder 27 includes an upper surface portion 27A, a pair of bearing portions 27B, a pair of shaft hole portions 27C, and an opening portion 27D. The upper surface portion 27A forms an upper surface of the roller holder 27. The upper surface portion 27A is formed in a flat plate shape. The pair of bearing portions 27B are provided below the upper surface portion 27A and face each other in the front-rear direction D2. The pair of bearing portions 27B rotatably support the pickup roller 25. The pair of shaft hole portions 27C are provided below the upper surface portion 27A and face each other in the front-rear direction D2. In addition, the pair of shaft hole portions 27C are provided farther on the left side than the pair of bearing portions 27B. The rotation shaft 26A of the sheet feed roller 26 is inserted through the pair of shaft hole portions 27C. The roller holder 27 is supported by the rotation shaft 26A that is inserted through the pair of shaft hole portions 27C so as to be rotatable in a rotation direction D5 shown in FIG. 3. The opening portion 27D opens in a rectangular shape in the upper surface 27A. The opening portion 27D is provided between the pair of bearing portions 27B and the pair of shaft hole portions 27C in the left-right direction D3.

The document guide portion 28 comes in contact with the bottom surface of the document on the downstream side of the sheet feed roller 26 in the feeding direction D4 to guide the document. The document guide portion 28 forms a portion of a lower side of the upper-side conveying path of the document conveying path 21C.

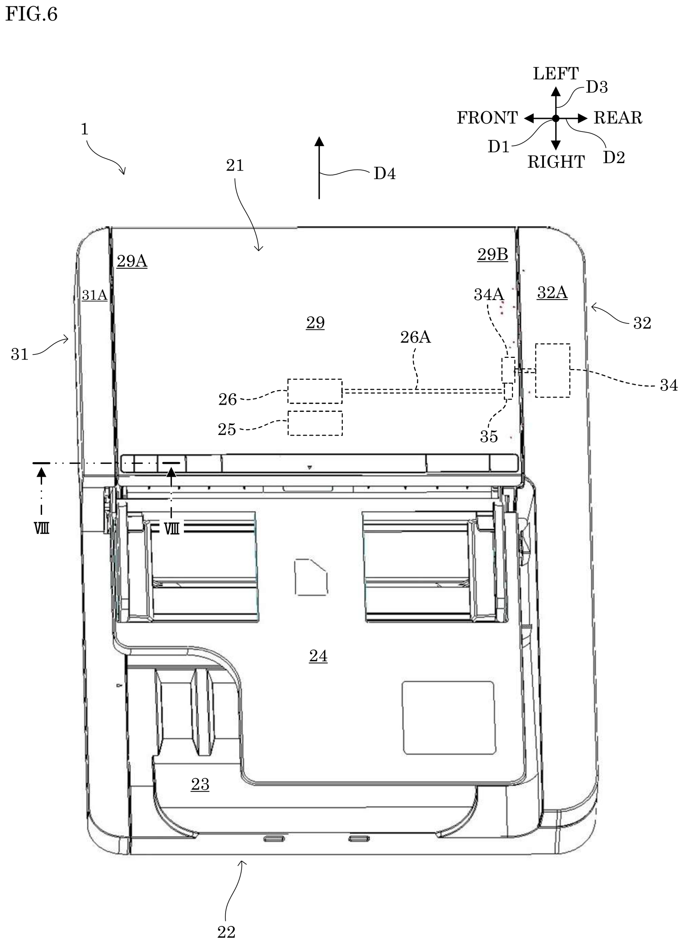

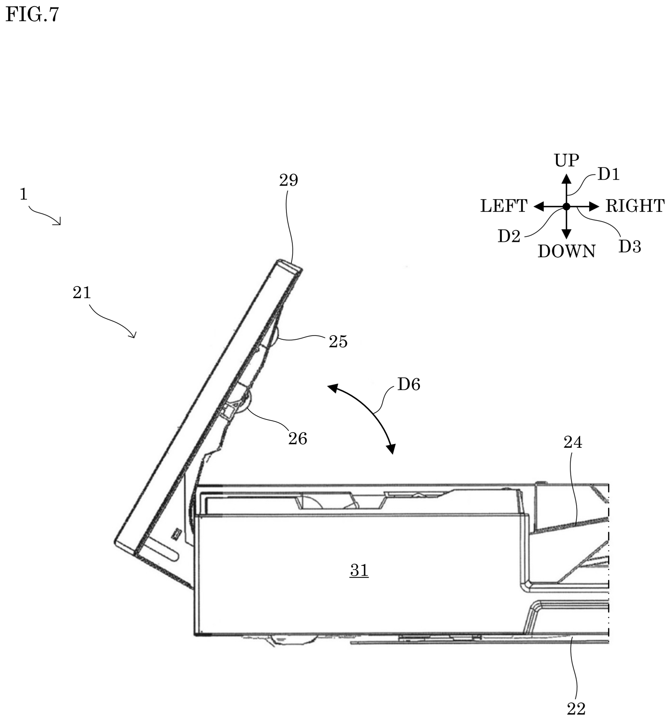

The cover portion 29 rotatably supports the rotation shaft 26A (see FIG. 5) of the sheet feed roller 26. The cover portion 29 is provided so as to be rotatable about a rotation shaft 29C (see FIG. 1) between a closed position (see FIG. 1) in which the document guide portion 28 is covered, and an open position (see FIG. 7) in which the document guide portion 28 is externally exposed. As shown in FIG. 1, the rotation shaft 29C is provided at a left end portion of the accommodating portion 21. For example, the rotation shaft 29C is provided in the cover portion 29. In addition, the accommodating portion 21 also includes a bearing portion that rotatably supports the rotation shaft 29C. The cover portion 29 rotates in a rotation direction D6 shown in FIG. 6 by the rotation shaft 29C being rotatably supported by the bearing portion of the accommodating portion 21. Note that the rotation shaft 29C may be provided in the accommodating portion 21. In this case, the cover portion 29 only needs to have a shaft hole portion through which the rotation shaft 29C is inserted. In addition, the rotation shaft 29C may be provided on the downstream side of the sheet feed roller 26 in the feeding direction D4.

The plurality of conveying rollers 30 are arranged spaced apart from each other along the document conveying path 21C. Each of the conveying rollers 30 conveys the document fed out by the pickup roller 25 toward the document discharge port 21B.

The front wall portion 31 is provided upright along a front end portion of the upper surface of the bottom surface portion 22 (see FIG. 2). The front wall portion 31 forms a front side surface of the accommodating portion 21.

The rear wall portion 32 is provided upright along a rear end portion of the upper surface of the bottom surface portion 22 (see FIG. 2). The rear wall portion 32 forms a rear side surface of the accommodating portion 21. In addition, as shown in FIG. 2, the rear wall portion 32 extends rightward from the accommodating portion 21.

As shown in FIG. 2, the front wall portion 31 and the rear wall portion 32 face each other in the axial direction of the rotation shaft 26A (the same direction as the front-rear direction D2) with the cover portion 29 interposed therebetween. As shown in FIG. 2, in a case in which the cover portion 29 is positioned in the closed position, the cover portion 29 forms the upper surface of the accommodating portion 21 together with an upper surface portion 31A that forms an upper surface of the front wall portion 31 and an upper surface portion 32A that forms an upper surface of the rear wall portion 32. The front wall portion 31 and the rear wall portion 32 are an example of a pair of wall portions according to the present disclosure.

The hook portion 33 is provided so as to be capable of advancing and retracting along the front-rear direction D2 at each of a front side end portion 29A (see FIG. 6) (an example of the second end portion according the present disclosure) and a rear side end portion 29B (see FIG. 6) (an example of the first end portion according to the present disclosure) of the cover portion 29. In a case in which the cover portion 29 is rotated to the closed position, the hook portion 33 comes into contact with the upper surface portion of either the front wall portion 31 or the rear wall portion 32 and retracts toward the cover portion 29 to engage with the upper surface portion.

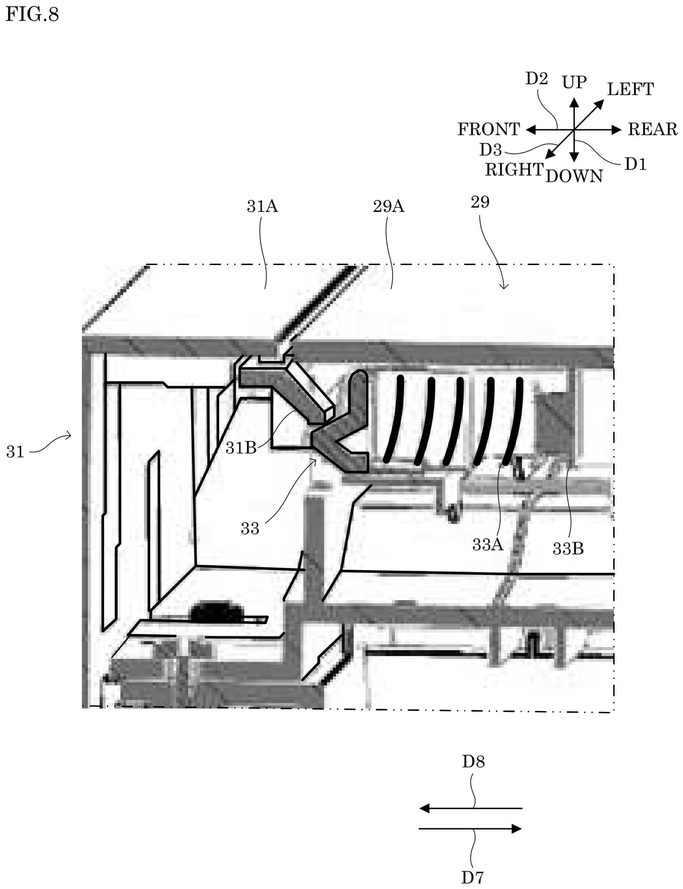

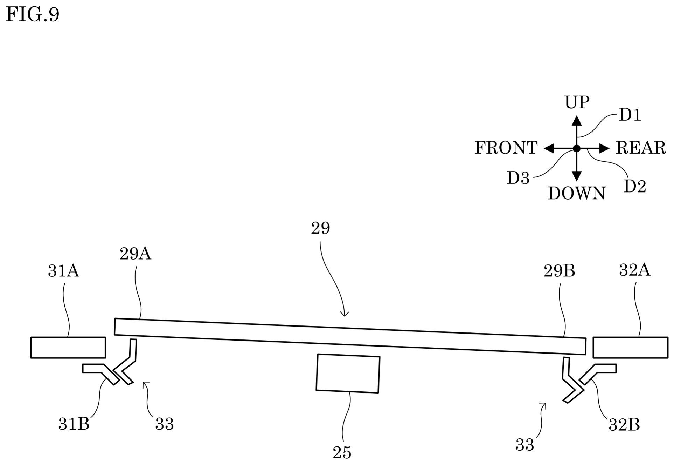

As shown in FIG. 8, the upper surface portion 31A of the front wall portion 31 includes an engaged portion 31B that engages with the hook portion 33 of the front side end portion 29A. The engaged portion 31B is formed in a flat plate shape that is inclined downward toward the cover portion 29 side. In addition, the upper surface portion 32A of the rear wall portion 32 includes an engaged portion 32B (see FIG. 9) that engages with the hook portion 33 of the rear side end portion 29B. The engaged portion 32B is formed in a flat plate shape that is inclined downward toward the cover portion 29 side.

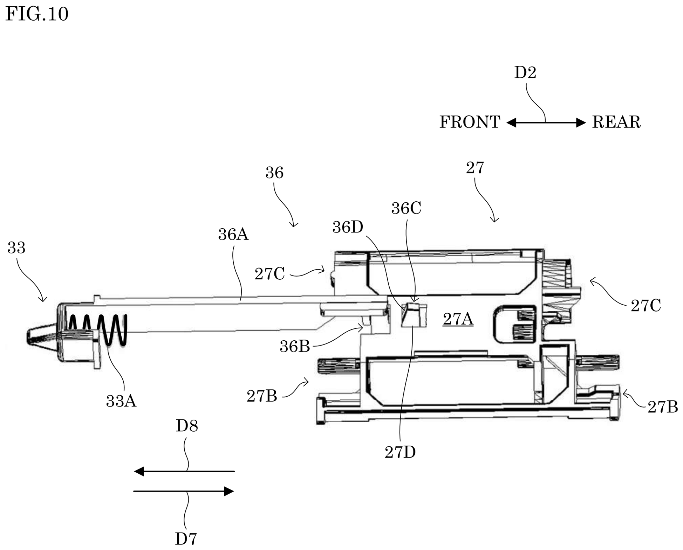

The hook portion 33 of the front side end portion 29A has a flat plate shaped portion formed in a flat plate shape perpendicular to the front-rear direction D2, and a protruding portion that protrudes in a V-shape from the flat plate shaped portion toward the front wall portion 31 (see FIGS. 8 and 10). The hook portion 33 of the front side end portion 29A is supported by the cover portion 29 so as to be capable of advancing and retracting in the front-rear direction D2.

As shown in FIG. 8, a coil spring 33A and a spring support portion 33B are provided at the front side end portion 29A of the cover portion 29. The coil spring 33A presses the hook portion 33 toward the front wall portion 31 side. The coil spring 33A is elongated in the front-rear direction D2, and an end portion on a front side thereof is in contact with the flat plate shaped portion of the hook portion 33. The spring support portion 33B supports an end portion on the rear side of the coil spring 33A.

When a user of the image forming apparatus 100 rotates the cover portion 29 from the open position to the closed position, before the cover portion 29 reaches the closed position, the protruding portion of the hook portion 33 of the front side end portion 29A comes into contact with the engaged portion 31B of the front wall portion 31, and the hook portion 33 is pressed toward the cover portion 29. Thus, the hook portion 33 of the front side end portion 29A retracts in a retracting direction D7 (see FIG. 8) against the biasing force of the coil spring 33A. When the cover portion 29 reaches the closed position, the protruding tip end portion of the protruding portion of the hook portion 33 of the front side end portion 29A moves below a lower end portion of the engaged portion 31B. Thus, the hook portion 33 advances slightly in an advancing direction D8 until the flat plate shaped portion comes into contact with the lower end portion of the engaged portion 31B, and then slides under the engaged portion 31B. That is, the hook portion 33 and the engaged portion 31B are engaged. The hook portion 33 and the engaged portion 31B are engaged with each other, thereby restricting rotation of the cover portion 29.

When the user of the image forming apparatus 100 rotates the cover portion 29 from the closed position to the open position, the protruding portion of the hook portion 33 of the front side end portion 29A comes into contact with the engaged portion 31B of the front wall portion 31, and the hook portion 33 is pressed toward the cover portion 29. Thus, the hook portion 33 of the front side end portion 29A retracts in a retracting direction D7 (see FIG. 8) against the biasing force of the coil spring 33A. When the protruding tip end portion of the protruding portion of the hook portion 33 of the front side end portion 29A moves above the lower end portion of the engaged portion 31B, the hook portion 33 of the front side end portion 29A advances in the advancing direction D8 (see FIG. 8) due to the biasing force of the coil spring 33A. Thus, the engagement between the hook portion 33 and the engaged portion 31B is released.

Note that the hook portion 33 and the surrounding configuration at the rear side end portion 29B are similar to those at the front side end portion 29A, and therefore a description thereof will be omitted.

As shown in FIG. 6, the motor 34 is provided on the lower side of the upper surface portion 32A of the rear wall portion 32. The motor 34 rotates the pickup roller 25 and the sheet feed roller 26.

The input gear 35 is provided at the rear side end portion 29B of the cover portion 29 (see FIG. 6). When the hook portion 33 of the rear side end portion 29B engages with the upper surface portion 32A of the rear wall portion 32, the input gear 35 forms a transmission path for the rotational driving force from the motor 34 to the pickup roller 25 and the sheet feed roller 26. The input gear 35 is an example of a gear according to the present disclosure.

As shown in FIG. 6, the rotation shaft 26A of the sheet feed roller 26 extends to the rear side end portion 29B of the cover portion 29. As shown in FIGS. 5 and 6, the input gear 35 is provided at the rear end portion of the rotation shaft 26A.

As shown in FIG. 6, the drive shaft of the motor 34 is provided with an output gear 34A. The motor 34 and the output gear 34A are provided at a position below the input gear 35 where they can engage with the input gear 35 when the hook portion 33 of the rear side end portion 29B engages with the upper surface portion 32A of the rear wall portion 32.

When the hook portion 33 of the rear side end portion 29B engages with the upper surface portion 32A of the rear wall portion 32, the input gear 35 and the output gear 34A engage with each other. Thus, a transmission path is formed for the rotational driving force from the motor 34 to the rotation shaft 26A of the sheet feed roller 26 via the output gear 34A and the input gear 35. Note that the rotational driving force transmitted to the sheet feed roller 26 is transmitted to the pickup roller 25 via a driving force transmission member such as a belt provided between the sheet feed roller 26 and the pickup roller 25.

In a known document conveying device, in a case in which the cover portion 29 is not completely closed, the front side end portion 29A of the cover portion 29 may lift up (see FIG. 9). In this case, the pickup roller 25 tilts in a state in which the rotational driving force can be transmitted to the pickup roller 25 via the input gear 35 (see FIG. 9). When the document is fed out while the pickup roller 25 is in a tilted state, problems such as sheet jams may occur.

In contrast to this, in the image forming apparatus 100 of the embodiment according to the present disclosure, as will be described below, it is possible to prevent the document from being fed out with the pickup roller 25 in a tilted state.

More specifically, the cover portion 29 includes a linking portion 36 shown in FIG. 10.

### [Configuration of Linking Portion 36]

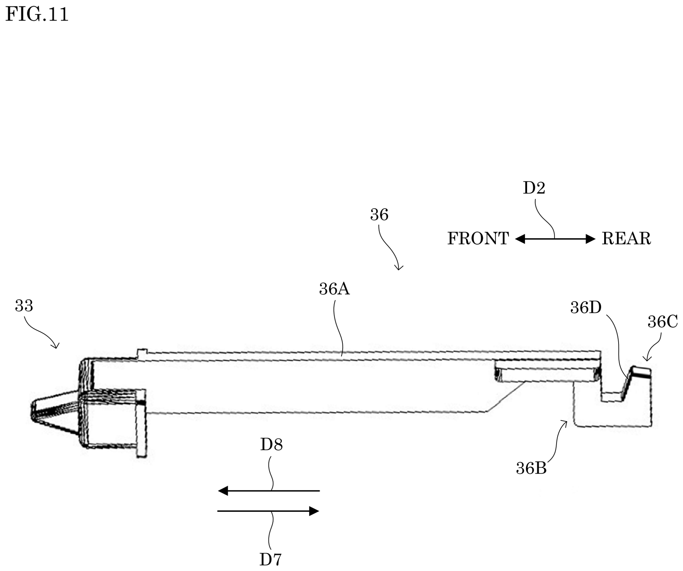

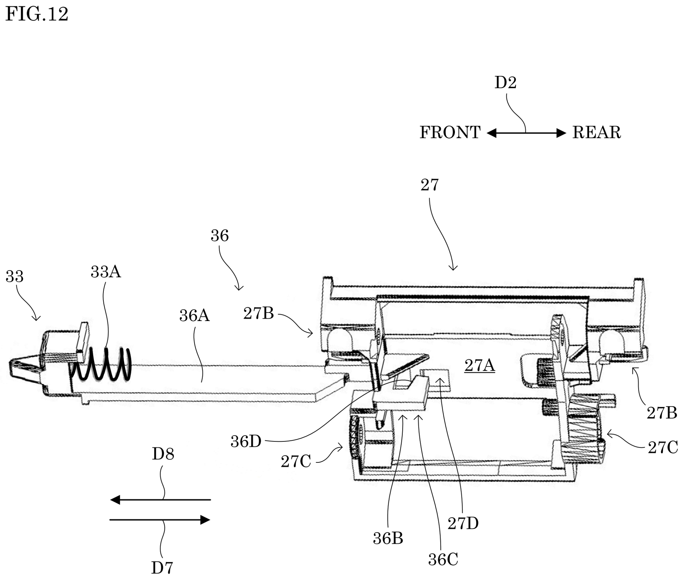

Next, a configuration of the linking portion 36 will be described with reference to FIGS. 10 to 14. Here, FIG. 10 is a view of the linking portion 36 when the roller holder 27 is not raised, as viewed from the upper right side. In addition, FIG. 11 is a view of the linking portion 36 as seen from the upper right side. In addition, FIG. 12 is a view of the linking portion 36 when the roller holder 27 is raised, as viewed from the lower right side.

The linking portion 36 is provided on the cover portion 29 and rotates the roller holder 27 in conjunction with advancing and retracting of the hook portion 33 at the front side end portion 29A of the cover portion 29.

More specifically, the linking portion 36 rotates the roller holder 27 from the separated position (see FIG. 3) to the contact position (see FIG. 4) in response to the retracting of the hook portion 33 of the front side end portion 29A in the retracting direction D7 as the cover portion 29 rotates from the open position to the closed position. In addition, the linking portion 36 rotates the roller holder 27 from the contact position (see FIG. 4) to the separated position (see FIG. 3) in response to advancing of the hook portion 33 of the front side end portion 29A in the advancing direction D8 as the cover portion 29 rotates from the closed position to the open position.

As shown in FIG. 11, the linking portion 36 includes an extending portion 36A, a support portion 36B, and an inclined surface forming portion 36C. The extending portion 36A extends from the hook portion 33 of the front side end portion 29A in the retracting direction D7. The support portion 36B supports the inclined surface forming portion 36C from farther on the lower side than an upper end portion of the extending portion 36A. The support portion 36B includes a first support portion that extends downward from the extending tip end of the extending portion 36A, and a second support portion that extends in the retracting direction D7 from a lower end portion of the first support portion. The inclined surface forming portion 36C forms an inclined surface 36D (see FIG. 11). The inclined surface 36D raises the roller holder 27 from below in conjunction with the advancing of the hook portion 33 of the front surface end portion 29A toward the front wall portion 31 side. More specifically, the inclined surface 36D is formed so as to be inclined upward toward the retracting direction D7 side. The inclined surface forming portion 36C is formed so as to protrude upward from the second support portion of the support portion 36B.

The linking portion 36 is provided so as to be capable of advancing and retracting integrally with the hook portion 33 of the front side end portion 29A. For example, the hook portion 33 of the front side end portion 29A and the linking portion 36 are integrally formed using a synthetic resin or the like.

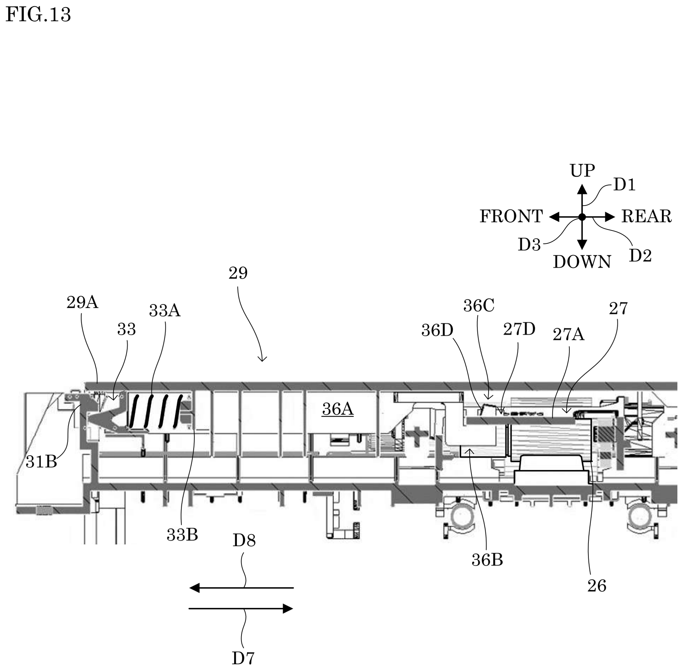

The inclined surface forming portion 36C of the linking portion 36 is inserted from below into the opening portion 27D of the roller holder 27 in a case in which the hook portion 33 of the front side end portion 29A is engaged with the engaged portion 31B of the front wall portion 31 (see FIGS. 10 and 13). In this state, the linking portion 36 does not raise the roller holder 27. Therefore, the pickup roller 25 is arranged at the contact position (see FIG. 4).

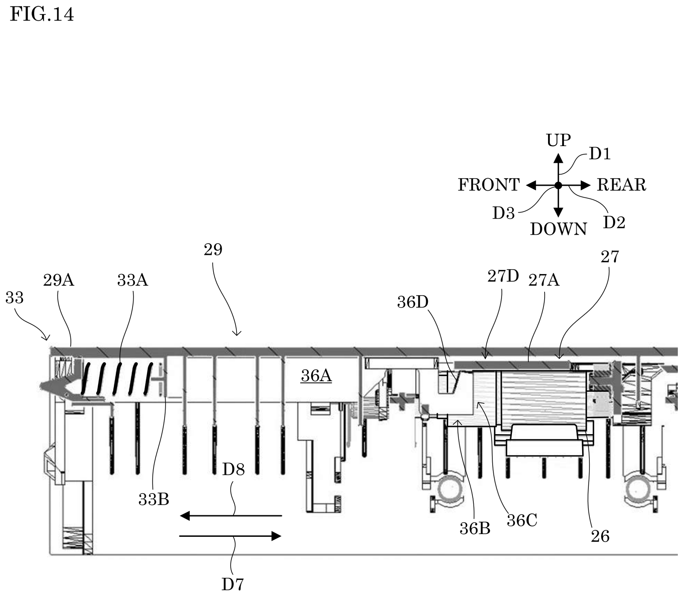

When the cover portion 29 is opened (rotated from the closed position toward the open position), the hook portion 33 of the front side end portion 29A disengages from the engaged portion 31B of the front wall portion 31, and the hook portion 33 advances in the advancing direction D8. Thus, the inclined surface forming portion 36C of the linking portion 36 inserted into the opening portion 27D of the roller holder 27 moves toward the advancing direction D8 side in conjunction with the hook portion 33. Therefore, the inclined surface 36D comes into contact with an edge portion of the opening portion 27D, and the roller holder 27 is pushed up along the inclined surface 36D. That is, the linking portion 36 raises the roller holder 27 (see FIGS. 12 and 14). Therefore, the pickup roller 25 is moved from the contact position (see FIG. 4) to the separated position (see FIG. 3).

When the cover portion 29 is closed (rotated from the open position toward the closed position), the hook portion 33 of the front side end portion 29A engages with the engaged portion 31B of the front wall portion 31, and the hook portion 33 retracts in the retracting direction D7. Thus, the inclined surface forming portion 36C of the linking portion 36 moves toward the retracting direction D7 side in conjunction with the hook portion 33, and the inclined surface forming portion 36C is inserted into the opening portion 27D of the roller holder 27. Therefore, the roller holder 27 is released from the raised state by the linking portion 36 (see FIGS. 10 and 13). Accordingly, the pickup roller 25 is moved from the separated position (see FIG. 3) to the contact position (see FIG. 4).

Here, even in a case in which the cover portion 29 is closed, unless the hook portion 33 of the front side end portion 29A is engaged with the engaged portion 31B of the front wall portion 31 as shown in FIG. 9, the inclined surface forming portion 36C of the linking portion 36 will not move toward the retracting direction D7 side. Therefore, the raised state of the roller holder 27 by the linking portion 36 is not released. In other words, the pickup roller 25 is prevented from picking up the document while the front side end portion 29A of the cover portion 29 is in a raised state.

In this way, the image forming apparatus 100 includes the linking portion 36 that rotates the roller holder 27 in conjunction with the advancing and retracting of the hook portion 33 at the front side end portion 29A of the cover portion 29. Thus, it is possible to prevent the document from being fed out while the pickup roller 25 is tilted.

In addition, the linking portion 36 of the image forming apparatus 100 includes an inclined surface 36D that raises the roller holder 27 from below in conjunction with the advancing of the hook portion 33 of the front side end portion 29A toward the front wall portion 31 side. Thus, it is possible to rotate the roller holder 27 with a simple configuration.

In addition, the linking portion 36 of the image forming apparatus 100 is provided so as to be capable of advancing and retracting integrally with the hook portion 33 of the front side end portion 29A. Thus, the configuration of the linking portion 36 can be simplified.

### [Supplementary Notes]

Below, an outline of the disclosure extracted from the above-described embodiments will be added. Note that the configurations and processing functions described in the following supplementary notes can be selected and combined as desired.

### <Supplementary Note 1>

A document conveying device including:
a document placement portion on which a document is placed;
a pickup roller configured to come into contact with an upper surface of the document placed on the document placement portion and pick up the document;
a sheet feed roller that is provided on a downstream side of the pickup roller in a feeding direction in which the pickup roller feeds the document, and configured to convey the document;
a roller holder configured to rotatably support the pickup roller and provided so as to be rotatable about a rotation shaft of the sheet feed roller between a contact position where the pickup roller comes in contact with the document and a separated position where the pickup roller is separated from the document;
a document guide portion configured to come in contact with a lower surface of the document farther on the downstream side in the feeding direction than the sheet feed roller, and guide the document;
a cover portion provided to rotatably support the sheet feed roller and to be rotatable about a shaft that is farther on the downstream side of the sheet feed roller in the feeding direction between a closed position that covers the document guide portion and an open position that externally exposes the document guide portion;
a pair of wall portions that face each other in an axial direction of the rotation shaft with the cover portion sandwiched therebetween;
a hook portion provided at each of a first end portion and a second end portion of the cover portion in the axial direction so as to be capable of advancing and retracting along the axial direction, the hook portion coming in contact with an upper surface portion of the wall portion when the cover portion is rotated to the closed position so as to retract toward the cover portion side and engage with the upper surface portion;
a motor configured to rotate the pickup roller and the sheet feed roller;
a gear provided at the first end portion, the gear configured to form a transmission path for a rotational driving force from the motor to the sheet feed roller and the pickup roller in a case in which the hook portion of the first end portion engages with the upper surface portion of the wall portion; and
a linking portion provided on the cover portion, and configured to rotate the roller holder in conjunction with the advancing and retracting of the hook portion of the second end portion.

### <Supplementary Note 2>

The document conveying device according to Supplementary Note 1, wherein
the linking portion has an inclined surface configured to raise the roller holder from below in conjunction with the advancing of the hook portion of the second end portion toward the wall portion side.

### <Supplementary Note 3>

The document conveying device according to Supplementary Note 1 or 2, wherein
the linking portion is provided so as to be capable of advancing and retracting integrally with the hook portion of the second end portion.

### <Supplementary Note 4>

An image forming apparatus, including:
the document conveying device according to any one of Supplementary Notes 1 to 3;
an image reading portion configured to read an image of the document conveyed by the document conveying device; and
an image forming portion configured to form an image of the document read by the image reading portion on a sheet.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A document conveying device (1) comprising:
a document placement portion (24) on which a document is placed;
a pickup roller (25) configured to come into contact with an upper surface of the document placed on the document placement portion (24) and pick up the document;
a sheet feed roller (26) that is provided on a downstream side of the pickup roller (25) in a feeding direction (D4) in which the pickup roller (25) feeds the document, and configured to convey the document;
a roller holder (27) configured to rotatably support the pickup roller (25) and provided so as to be rotatable about a rotation shaft (26A) of the sheet feed roller (26) between a contact position where the pickup roller (25) comes in contact with the document and a separated position where the pickup roller (25) is separated from the document;
a document guide portion (28) configured to come in contact with a lower surface of the document farther on the downstream side in the feeding direction (D4) than the sheet feed roller (26), and guide the document;
a cover portion (29) provided to rotatably support the sheet feed roller (26) and to be rotatable about a shaft (29C) that is farther on the downstream side of the sheet feed roller (26) in the feeding direction (D4) between a closed position that covers the document guide portion (28) and an open position that externally exposes the document guide portion (28);
a pair of wall portions (31, 32) that face each other in an axial direction of the rotation shaft (26A) with the cover portion (29) sandwiched therebetween;
a hook portion (33) provided at each of a first end portion (29B) and a second end portion (29A) of the cover portion (29) in the axial direction so as to be capable of advancing and retracting along the axial direction, the hook portion (33) coming in contact with an upper surface portion (31A, 32A) of the wall portion (31, 32) when the cover portion (29) is rotated to the closed position so as to retract toward the cover portion (29) side and engage with the upper surface portion;
a motor (34) configured to rotate the pickup roller (25) and the sheet feed roller (26);
a gear (35) provided at the first end portion (29B), the gear (35) configured to form a transmission path for a rotational driving force from the motor (34) to the sheet feed roller (26) and the pickup roller (25) in a case in which the hook portion (33) of the first end portion (29B) engages with the upper surface portion (32A) of the wall portion (32); and
a linking portion (36) provided on the cover portion (29), and configured to rotate the roller holder (27) in conjunction with the advancing and retracting of the hook portion (33) of the second end portion (29A).

2. The document conveying device (1) according to claim 1, wherein
the linking portion (36) has an inclined surface (36D) configured to raise the roller holder (27) from below in conjunction with the advancing of the hook portion (33) of the second end portion (29A) toward the wall portion (31) side.

3. The document conveying device (1) according to claim 1 or 2, wherein
the linking portion (36) is provided so as to be capable of advancing and retracting integrally with the hook portion (33) of the second end portion (29A).

4. An image forming apparatus (100), comprising:
the document conveying device (1) according to any one of claim 1 to 3;
an image reading portion (2) configured to read an image of the document conveyed by the document conveying device (1); and
an image forming portion (3) configured to form an image of the document read by the image reading portion (2) on a sheet.
